Europäisches Patentamt

European Patent Office

Office européen des brevets

(19)

(11) Publication number: **0 019 382**
**B1**

(12) **EUROPEAN PATENT SPECIFICATION**

(45) Date of publication of patent specification: **20.07.83**

(51) Int. Cl.³: **B 29 D 27/00**

(21) Application number: **80301361.4**

(22) Date of filing: **25.04.80**

(54) **Improved dielectric embossing of foam.**

(30) Priority: **26.04.79 US 33683**

(43) Date of publication of application:
**26.11.80 Bulletin 80/24**

(45) Publication of the grant of the patent:
**20.07.83 Bulletin 83/29**

(84) Designated Contracting States:
**BE DE FR GB IT NL SE**

(56) References cited:
**DE - B - 1 267 417**
**FR - A - 1 329 849**
**GB - A - 800 474**
**GB - A - 843 380**
**GB - A - 1 132 353**
**GB - A - 1 180 081**
**US - A - 2 946 713**
**US - A - 3 061 460**
**US - A - 3 144 372**
**US - A - 3 175 025**
**US - A - 3 244 571**
**US - A - 3 844 876**

(73) Proprietor: **SCOTT PAPER COMPANY**
**Industrial Highway Tinicum Island Road**
**Delaware Pennsylvania (US)**

(72) Inventor: **Volz, Robert Andrew**
**303 North Chester Road**
**West Chester Pennsylvania 19380 (US)**

(74) Representative: **McCall, John Douglas et al,**
**W.P. THOMPSON & CO. Coopers Building Church**
**Street**
**Liverpool L1 3AB (GB)**

Courier Press, Leamington Spa, England.

Improved dielectric embossing of foam

The present invention relates to processes for dielectrically embossing foam and thermal reticulation processes for flexible foam to remove the windows in said foam.

Processes for dielectrically embossing foam laminates are known and disclosed in patents such as U.S. Patent 3,244,571, inventor M. Weisman and Canadian patent 601,681, inventor A. Cox et al.

The laminate is a composite product made by dielectrically embossing foam and a cover fabric or film material such as nylon fabric or vinyl plastic sheet. Well known products such as seat cushions and automotive door panels are examples of such products. The advantage of dielectrically embossing foam and a cover fabric or film is that the process simultaneously shapes and embosses the product and adheres the cover material to the foam particularly in the areas of greatest embossment. Any inconsistency in response of the foam to the dielectric energy field is manifested by inadequately embossed or adhered sections or overly heat treated sections of the product. This is believed to be due to irregularities in the effect of the dielectric field upon the foam from one part of the piece of foam to another.

U.S. Patent 3,844,876, inventor Shuffman et al. discloses a particularly suitable process of simultaneously embossing and adhering a flexible film or fabric material to a flexible polyurethane foam by placing the foam and the material to be laminated to the foam in an embossing press, pressing the pieces together while subjecting them to a dielectric field to heat set the foam and adhere it to the flexible material. U.S.—A 2946713, inventor Dusina et al, discloses a process, using dielectric heat, of simultaneously adhering a sheet of foam material with a layer of sponge rubber, and embossing. Such processes are improved by the present invention, which utilised a thermally reticulated foam material. Use of a thermally reticulated foam material of a type which is inherently dielectrically responsive results in significant benefits. Simultaneous embossing and laminating as called for, e.g. in U.S.—A—2946713 results in problems arising out of irregular and unpredictable bonding. The present invention overcomes this by use of thermally reticulated foam which leads to more uniform and more predictable bonding.

G.B.—A—1,180,081 does disclose the possibility of using a reticulated foam layer in a laminate comprising a thermoplastic sheet, a foam layer and a flock layer, but the laminate is not produced by simultaneous embossing and laminating and no call is made for an inherently dielectrically active foam material. Indeed at least so far as the adhesion of the flock to the foam is concerned, this is achieved by use of an adhesive.

Foam materials that are not inherently active in a dielectric field, have been impregnated with chemicals such as polyvinyl chloride that are active in a dielectric field so that the resulting impregnated foam can be used in dielectric processes. Sometimes these foams, prior to being impregnated with the dielectrically active material, have been treated to open or reticulate the foam in order to facilitate impregnating the foam with a dielectrically active material. U.S. Patent 3,061,460, inventor E. Schickedanz discloses such technology. However, such foams are not inherently dielectrically active but require the posttreatment of impregnating to become sufficiently dielectrically active and accordingly are not suitable for use in the present invention.

According to the present invention there is provided a dielectric embossing process for simultaneously adhering a flexible cover material to a dielectrically active flexible foam and embossing the composite of the foam and the cover material, which process comprises contacting the foam with the cover material, compressing the foam and cover material to impress a predetermined pattern into the cover material and the foam, subjecting the compressed composite to a dielectric energy field of at least 12 $mH_z$ for a sufficient time to dielectrically heat the foam and set the impressed pattern into the foam and the cover material and adhere the cover material to said foam, characterised by thermally reticulating the foam prior to contacting the foam with the cover material.

The invention also provides a dielectrically embossed laminate comprising an inherently dielectrically active flexible foam, a flexible cover material adhesively attached to the foam by a dielectrically heat set adhesive bond between said cover material and said foam and a dielectrically heat set embossing pattern in said cover material and foam, characterised in that said foam is thermally reticulated prior to contacting the foam with the cover material.

The process improved by the present invention comprises contacting a dielectrically active flexible foam with a flexible cover material, compressing the foam and cover material, e.g. between two platens, to impress a predetermined pattern into the cover material and the foam (embossing) and subjecting the embossed composite to a dielectric energy field of at least 12 $mH_z$ for a sufficient time to dielectrically heat the foam and set the impressed pattern into the foam and cover material and adhere the cover material to the foam. Such a process is improved by the present invention by thermally reticulating the foam prior to contacting the foam with the cover material which improves the uniformity of the embossed product particularly the consistency of the embossing and the adhesive bond between the foam and the cover material that is dielectrically heat set into the product during the process. The process, known in the art as dielectrically heat sealing or embossing, has been used to manufacture articles such as seat cushions, door panels for automobiles and similar laminated articles in which the foam component usually functions as a cushion, the cover material functions as a decorative and durable surface and the embossed pattern gives a decorative look and functional shape to the laminate. U.S. Patent 3,844,876, inventor Shuffman et al. and 3,244,571, inventor M. Weisman disclose dielectrical embossing processes employing a dielectrically active foam covered with a film such as vinyl or a fabric material such as woven nylon.

Thermal reticulation of the foam prior to dielectrically embossing the foam is performed in accordance with the disclosure in U.S. Patent 3,175,025, inventor H. Geen. In essence, a pressure vessel is filled with the foam, the gases in the vessel are evacuated, the vessel is then filled with an explosive mixture such as hydrogen and oxygen, the vessel is then sealed and the explosive mixture ignited. Because the pressure vessel is filled with foam, the explosive front or flame front precedes through the foam and the explosive force is absorbed by the foam. The flame front preceding through the foam burns or consumes the thin window membranes connecting the cells strands and forming cell walls. Thermally reticulated foam is described in U.S. Patent 3,390,106, inventor H. Geen which patent is incorporated herein by reference with respect to the description of thermally reticulated foam.

It is believed that the thin cell membranes connecting the strands of the cell walls have an ability to quickly assimilate energy because of their large surface area in comparison to the strands. Commercially produced foams tend to vary in their number and location of cell membranes which is manifested by a large variance in the porosity of the foam. Thermal reticulation of the foam removes the cell membranes and essentially eliminates the porosity variance. The reticulated foam gives consistent performance in the dielectric embossing process.

A comparison of two samples of foam, one thermally reticulated and one not thermally reticulated but otherwise identical, shows the difference between reticulated foam vs. the non-reticulated foam in a dielectric energy field. A non-reticulated foam, when covered with a film or fabric material and put in a typical dielectric heat press gives irregular or inconsistent results in that for a particular energy setting in the press, one portion of the foam may be dielectrically heat set and the film material adhesively attached to the foam while another portion of the same piece of foam may not be adequately heat set although exposed to the same level of dielectric energy. If the dielectric energy to which the foam is exposed is increased to insure dielectrically heat setting all the foam, some portions or pieces of foam may be overly heat treated and arcing through the foam will occur.

It has been found that pieces of foam from the same foam bun, though apparently uniform in chemistry and physical pore size, does vary significantly in porosity. This porosity variance is due to the difference in the number of cell windows and is believed to cause the difference in performance of the foam in dielectric embossing processes. By reticulating the foam, the porosity variance can be essentially eliminated and the variation in performance in dielectric heat sealing or embossing processes is thereby dramatically reduced.

Preferred foams for use in the present invention are flexible polyurethane foams that are inherently active in a dielectric energy field. Inherently active means that the foam, as made, is sufficiently heated in a dielectric field of about 12 megahertz ($mH_z$) to be heat set while compressed without requiring any separate treatments to acquire such dielectric activity. The preferred polyurethane foam is made from a polyol resin and isocyanate mixture with the polyol selected for its activity in a dielectric field or the mixture is modified to be active in a dielectric field by adding dielectrically active ingredients such as polyvinyl chloride, vinyl acetate, metal powders, or salts to the mixture so that the resulting foam can be heated dielectrically. Foams that cannot be heated dielectrically but are posttreated, e.g., coated or impregnated after foaming, to be dielectrically active, are not suitable for use in the present invention because such foams are not inherently dielectrically active, that is without the posttreatment, the foam is not significantly heated in a dielectric field of about 12 $mH_z$.

The preferred, inherently dielectrically active, flexible polyurethane foam is made by a conventional one-shot, polyurethane foam manufacturing process from the following recipe:

| Ingredient | Parts by weight |
|---|---|
| NIAX polyol E-396 | 100 |
| Water | 2.3 |
| Diethanolamine | 0.8—1.0 |
| NIAX A-1 | 0.10 |
| DABCO 33LV | 0.30 |
| Dibutyltindilurate, T12 | 0.30 |
| Silicone surfactant Y-6922 | 1.5—1.8 |
| Fyrol FR-2 | 5.0 |
| Blowing Agent | 8.0 |
| NIAX Isocyanate TDI | 32.7—33.2 |

Some of the ingredients listed in the above recipe for the preferred polyurethane foam are listed according to their commercial trade name and are defined chemically as follows:

NIAX polyol E-396 is a polymer polyol, based on a polyether polyol, with a molecular weight in the range of about 4,500 to 5,500, having a high ethylene oxide cap to provide a high percentage of primary hydroxyl end groups, and grafted with acrylonitrile and styrene. The dielectric activity of the resulting foam is mainly imparted by this polymer polyol primarily due to the grafting with acrylonitrile and styrene and the molecular weight of the polyether based polymer polyol with its highly active primary hydroxyl terminal groups. NIAX polyol E-396 is available from Union Carbide Corporation.

NIAX catalyst A-1 is a mixture of 70% dis (2-dimethylaminoethyl) ether and 30% dipropylene glycol. This catalyst is available from Union Carbide Corporation.

DABCO 33LV is a mixture of one part triethylenediamine and two parts dipropylene glycol and available from Houdry Process and Chemical Company of Philadelphia, Pennsylvania.

Silicone surfactant Y-6922 is available from Union Carbide Corporation and it is a copolymer of dimethyl polysiloxane and polyoxyalkylene ether.

Fyrol FR-2 is available from Stauffer Chemical Company and is Tris (dichloropropyl) phosphate.

The Blowing Agent is preferably methylene chloride or NIAX blowing agent 11 which is a fluorocarbon (trichloromonofluoromethane).

NIAX isocyanate is toluene diisocyanate, the 80/20 isomer blend.

The above recipe has an index of 105.

Polyurethane foam can be either thermally or chemically reticulated. However, for practising the present invention, it is necessary that the foam be thermally reticulated.

After reticulation of the foam, a cover material is placed thereon and the composite is compressed with a predetermined embossing pattern by placing the composite into a press that impresses a pattern simultaneously into the cover material and the foam. The pattern is set by subjecting the composite to dielectric energy which heats the foam and thermally bonds the foam in the shape of the impressed pattern and adheres the foam to the cover material (referred to as dielectrically heat set).

Suitable cover materials are flexible, thermoplastic films such as vinyl plastic with or without a fabric backing and woven and nonwoven cloth preferably containing thermoplastic fibers. Dyes if used to color the cloth or the vinyl film should be a nonmetallic dye so as to avoid arcing during dielectric heating which would cause scorching and discolorations of the cover material. The patents cited in the background of the art which disclosed dielectric embossing processes (Weisman, Shuffman and Schickedanz) disclose suitable cover materials and dielectric embossing processes. The dielectric embossing processes for simultaneously embossing a foam and adhering a cover material to the foam as disclosed in those patents are improved in accordance with the present invention.

The best mode presently contemplated for practising the present invention is by thermally reticulating with hydrogen and oxygen in a pressure vessel, the polyurethane foam made according to the preferred recipe given above, placing a cover material of woven nylon fabric over a piece of the reticulated foam, placing the reticulated foam with the cover material between two platens, at least one of which has a predetermined embossing pattern, compressing the foam and fabric between the platens with the fabric covered surface being compressed by a platen having a predetermined embossing pattern, subjecting the compressed reticulated foam and cover material to a dielectric field of at least 12 mH$_z$ and preferably between 12 and 60 mH$_z$ for sufficient time to dielectrically heat set the embossed pattern into the foam and fabric material and adhesively bond the fabric material to the foam followed by partially cooling the embossed foam and cover material while still compressed between the platens. When a stronger adhesive bond is desired, an adhesive can be placed between the cover material and the foam to supplement the dielectrically induced adhesive bond between the foam and the cover material. The product produced by the above process has significantly improved consistency in the adhesive bond when subjected to a uniform dielectric field compared to product produced by an otherwise identical dielectric embossing process but using nonreticulated foam.

## Claims

1. A dielectric embossing process for simultaneously adhering a flexible cover material to a dielectrically active flexible foam and embossing the composite of the foam and the cover material, which process comprises contacting the foam with the cover material, compressing the foam and cover material to impress a predetermined pattern into the cover material and the foam, subjecting the compressed composite to a dielectric energy field of at least 12 mH$_z$ for a sufficient time to dielectrically heat the foam and set the impressed pattern into the foam and the cover material and adhere the cover material to said foam, characterised by thermally reticulating the foam prior to contacting the foam with the cover material.

2. A process as claimed in claim 1, characterised in that said foam is a polyurethane foam made from a polyether based polymer polyol.

3. A process as claimed in claim 1 or 2, characterised in that said cover material is a thermoplastic film or nylon fabric and dyed with a non-metallic dye.

4. A product characterised by being produced by a process as claimed in any one of claims 1 to 3.

5. A dielectrically embossed laminate comprising an inherently dielectrically active flexible foam, a flexible cover material adhesively attached to the foam by a dielectrically heat set adhesive bond between said cover material and said foam and a dielectrically heat set embossing pattern in said cover material and foam, characterised in that said foam is thermally reticulated prior to contacting the foam with the cover material.

6. An embossed laminate as claimed in claim 5 characterised in that said foam is free of posttreatments to impregnate the foam with a dielectrically active material.

7. An embossed laminate as claimed in claim 5 or 6, characterized in that said cover material is a woven or non-woven fabric containing thermoplastic fibers, or a thermoplastic film.

8. An embossed laminate as claimed in any one of claims 5 to 7, characterised in that said cover material is dyed with a non-metallic dye.

9. An embossed laminate as claimed in any one of claims 5 to 8, characterised in that said foam is a polyurethane foam.

## Patentansprüche

1. Verfahren zum dielektrischen Prägen eines dielektrisch aktiven Weichschaumstoffs unter gleichzeitigem Aufkleben eines nachgiebigen Deckmaterials, indem der Schaumstoff mit dem Deckmaterial in Berührung gebracht, in das Deckmaterial und den Schaumstoff ein vorbestimmtes Muster einpreßt und im zusammengepreßten Zustand einem dielektrischen Feld von zumindest 12 MHz ausreichend lang ausgesetzt wird, um den Schaumstoff dielektrisch zu erwärmen und das eingepreßte Muster in Schaumstoff und Deckmaterial zu fixieren, wobei gleichzeitig das Deckmaterial auf den Schaumstoff geklebt wird, dadurch gekennzeichnet, daß man den Schaumstoff vor Aufbringen des Deckmaterials thermisch öffnet bzw. netzartig macht.

2. Verfahren nach Anspruch 1, dadurch gekennzeichnet, daß der Schaumstoff ein Polyurethan-Schaumstoff, hergestellt aus einem Polyetherpolyol, ist.

3. Verfahren nach Anspruch 1 oder 2, dadurch gekennzeichnet, daß das Deckmaterial eine thermoplastische Folie oder ein Gewebe aus Nylon, gefärbt mit einem nicht-metallischen Farbstoff, ist.

4. Produkt, hergestellt nach dem in einem der Ansprüche 1 bis 3 beschriebenen Verfahren.

5. Dielektrisch geprägtes Laminat aus einem in sich dielektrisch aktiven Weichschaumstoff und einem darauf aufgeklebten flexiblen Deckmaterial, hergestellt durch dielektrisches Erwärmen zur klebenden Verbindung zwischen Deckmaterial und Schaumstoff mit einem durch dielektrisch erzeugte Wärme eingeprägtem Muster im Deckmaterial und Schaumstoff, dadurch gekennzeichnet, daß der Schaumstoff vor Aufbringen des Deckmaterials thermisch geöffnet oder netzartig gemacht worden ist.

6. Laminat nach Anspruch 5, dadurch gekennzeichnet, daß der Schaumstoff keine Nachbehandlungen zur Imprägnierung mit einem dielektrisch aktiven Material bedurfte.

7. Laminat nach Anspruch 5 oder 6, dadurch gekennzeichnet, daß das Deckmaterial ein gewebtes oder nicht-gewebtes Tuch, enthaltend thermoplastische Fasern, oder eine thermoplastische Folie ist.

8. Laminat nach Anspruch 5 bis 7, dadurch gekennzeichnet, daß das Deckmaterial mit einem nicht-metallischen Farbstoff gefärbt ist.

9. Laminat nach Anspruch 5 bis 8, dadurch gekennzeichnet, daß der Schaumstoff ein Polyurethanschaumstoff ist.

## Revendications

1. Procédé de gaufrage diélectrique destiné à simultanément faire adhérer une matière de couverture souple à une mousse flexible diélectriquement active et à gaufrer le composite de la mousse et de la matière de couverture, ledit procédé consistant à mettre en contact la mousse et la matière de couverture, à comprimer la mousse et la matière de couverture pour imprimer un dessin prédéterminé dans la matière de couverture et la mousse, à soumettre le composite comprimé à un champ d'énergie diélectrique d'au moins 12 MHz pendant une durée suffisant pur chauffer diélectriquement la mousse et fixer le dessin imprimé dans la mousse et la matière de couverture et faire adhérer la matière de couverture à ladite mousse, caractérisé en ce qu'on fait subir à la mousse une réticulation thermique avant sa mise en contact avec la matière de couverture.

2. Procédé selon la revendication 1, caractérisé en ce que la mousse est une mousse de polyuréthanne obtenue à partir d'un polyol polymère à base de polyéther.

3. Procédé selon la revendication 1 ou 2, caractérisé en ce que ladite matière de couverture est une pellicule thermoplastique ou une étoffe de "Nylon" et est colorée avec un colorant non métallique.

4. Produit caractérisé en ce qu'il est obtenu par un procédé selon l'une quelconque des revendications 1 à 3.

5. Stratifié gaufré diélectriquement comprenant une mousse flexible diélectriquement active par nature, une matière de couverture souple fixée par adhérence à la mousse par une liaison adhésive obtenue par chauffage diélectrique entre la matière de couverture et la mousse et un dessin de gaufrage fixé par chauffage diélectrique dans ladite matière de couverture et la mousse, caractérisé en ce que ladite mousse est réticulée thermiquement avant son contact avec la matière de couverture.

6. Stratifié gaufré selon la revendication 5, caractérisé en ce que ladite mousse ne subit pas de traitements après-coup pour l'imprégner d'une matière diélectriquement active.

7. Stratifié gaufré selon la revendication 5 ou 6, caractérisé en ce que la matière de couverture est une étoffe tissée ou non tissée contenant des fibres thermoplastiques, ou une pellicule thermoplastique.

8. Stratifié gaufré selon l'une quelconque des revendications 5 à 7, caractérisé en ce que ladite matière de couverture est colorée avec un colorant non métallique.

9. Stratifié gaufré selon l'une quelconque des revendications 5 à 8, caractérisé en ce que ladite mousse est une mousse de polyuréthanne.